Europäisches Patentamt

European Patent Office

Office européen des brevets

(19)

(11) Publication number: **0 055 055**
**A2**

# EUROPEAN PATENT APPLICATION

(12)

(21) Application number: **81305838.5**

(22) Date of filing: **11.12.81**

(51) Int. Cl.³: **C 08 F 8/44**

(30) Priority: **22.12.80 US 218909**

(43) Date of publication of application: **30.06.82**
**Bulletin 82/26**

(84) Designated Contracting States: **AT BE CH DE FR GB IT**
**LI NL SE**

(71) Applicant: **Rohm and Haas Company, Independence**
**Mall West, Philadelphia, Pennsylvania 19105 (US)**

(72) Inventor: **Witiak, David, 500 Stony Hill Road, Yardley**
**Pennsylvania 19067 (US)**

(74) Representative: **Angell, David Whilton et al, Rohm and**
**Haas Company Patent Department Chesterfield House**
**Barter Street, London WC1A 2TP (GB)**

(54) **Method of stabilizing hydrophilic polymer compositions and stabilized hydrophilic polymer compositions.**

(57) Hydrophylic copolymers of a) an $\alpha,\beta$-monoethylenically unsaturated carboxylic acid and b) a $(C_2-C_6)$hydroxyalkyl ester of an $\alpha,\beta$-monoethylenically unsaturated carboxylic ester and concentrated aqueous solutions thereof are stabilized against gelation by partial neutralization of the polymer to the extent of at least 25%, preferably 25–75%.

EP 0 055 055 A2

ACTORUM AG

1

METHOD OF STABILIZING HYDROPHILIC
POLYMER COMPOSITIONS AND STABILIZED
HYDROPHILIC POLYMER COMPOSITIONS

This invention relates to a method of stabilizing hydrophilic copolymers against gelation and stabilized hydrophilic polymer compositions.

A variety of hydrophilic polymers have been developed for incorporation into regenerated cellulose to increase the fluid absorbency of the rayon fibers produced therefrom. The rayon fibers incorporating the hydrophilic polymers are commonly referred to as "alloy rayon fibers." Typically, the alloy rayon is produced by adding the hydrophilic polymer to the viscose solution, at any stage of viscose aging, and then spinning or extruding the viscose solution containing the polymer into an acid bath wherein the cellulose fiber is regenerated. The hydrophilic polymer should be in salt form for complete solubility in the viscose solution and in order to provide high absorbency in the alloy rayon. While the viscose is highly caustic and therefore inherently will neutralize the hydrophilic polymer, it is common practice to pre-neutralize the hydrophilic polymer before addition to the viscose dope.

Representative patents which describe the use of polymers for increasing the fluid-holding capacity of rayon fibers are U.S. Reissue Patent 30,039 and U.S. Patents 4,066,584, 4,104,214 and 4,199,367.

Recently, a new class of hydrophilic polymers has been developed, specifically for use in producing alloy rayon having enhanced fluid-holding capacity. The use of these polymers in alloy rayon is described and covered in our copending European Patent Application No.          claiming priority from United States Serial No. / filed simultaneously                        219 134 herewith. Among the hydrophilic polymers described therein are copolymers of acrylic acid or methacrylic acid and hydroxyalkyl $(C_2-C_6)$ esters of such acids. Typical of these copolymers are the following: acrylic acid/hydroxyethyl methacrylate, acrylic acid/-hydroxyethyl acrylate, acrylic acid/hydroxypropyl methacrylate, acrylic acid/hydroxypropyl acrylate, and the corresponding copolymers wherein methacrylic acid is substituted for all or part of the acrylic acid.

These hydrophilic polymers have the unique property of being sufficiently hydrophobic under the highly acidic and high electrolyte conditions of the spinning bath into which rayon viscose is spun, such that most, if not all, of the polymer incorporated into the viscose prior to the spinning step remains in the fiber, thereby minimizing the amount of non-alloyed and extractable polymer carried over into the spin bath. This is significant because it has been found that non-alloyed and extractable polymer carried over tends to accumulate and eventually form sticky precipitates. These precipitates will contaminate the rayon spinning lines and even the spinnerettes, and thereby reducing the efficiency of the alloy fiber production and requiring expensive modifications of the production process and equipment.

Although the hydrophilic copolymers of the copending application are highly effective for increasing fluid absorbency of the alloy rayon made therefrom while also minimizing precipitation of non-alloyed polymer in the spinning bath, it has been found difficult to control the viscosity of the polymers prior to blending with the viscose dope. For example, the hydrophilic polymer as prepared undergoes gellation and a rapid increase in viscosity which inhibits the subsequent handling and admixture with the viscose dope. Even the conventional step of pre-neutralization of the polymers prior to admixture with the viscose has not been fully effective and in fact has tended to unduly increase the viscosity of the polymer concentrate solution (or of the viscose dope if the polymer is added directly to the dope without pre-neutralization) with the result that the polymer concentrate and the viscose dope containing the concentrate cannot be efficiently pumped or otherwise handled during the alloy rayon production process.

3

Polymers based on hydroxyalkyl esters of carboxylic acids are also known for a variety of uses other than in rayon alloy fibers. However, the prior art, such as the following patents, does not provide sufficient guidance with respect to monomer selected and ratios,

-4-

molecular weight, degree of neutralization and other properties, to enable the polymers to be used effectively as alloying components of rayon fiber.

U.S. patent 3,311,583 to Bearden describes terpolymers of acrylic or methacrylic acid (10-40 wt.%), alkyl ($C_1-C_8$) esters thereof (10-65 wt. %) and hydroxyalkyl ($C_2-C_4$) esters thereof (15-70 wt. %) in coating compositions which are converted into insoluble polymeric materials upon heating. Example 3 of the patent describes a polymer solution neutralized by an amount of ammonium hydroxide equivalent to 30% of the acidity. U.S. patent 3,424,638 to Marans describes acrylic acid/ 2-hydroxyethyl methacrylate blends (80/20 to 20/80) which are polymerized in bulk by ionizing irradiation, thus causing the material to bond to a substrate on which it is placed. U.S. patent 3,567,118 to Shepherd et al describes the entrapping of essences in a fibrous material by treating the fibrous material with a coating of a hydrophilic copolymer including copolymers of 2-hydroxyethyl acrylate or methacrylate and 0.1-15 % of an acid monomer such as acrylic or methacrylic acid. U.S. patent 3,669,103 to Harper et al describes lightly crosslinked homopolymers of 2-hydroxyethyl acrylate, and alkali metal salts thereof, for application to a flexible support such as a diaper material. U.S. patent 4,029,577 to Godlewski et al describes water-soluble polymers, including fully neutralized forms thereof, of acrylic acid and a hydroxy lower alkyl acrylate (mole ratio 34:1 to 1:4), for use in controlling the deposition of scale deposits in water processing systems such as steam generators and cooling water systems. U.S. patent 4,190,562 to Westerman teaches water absorbent films of acrylic or methacrylic acid copolymers crosslinked with hydroxyethyl methacrylate or hydroxypropyl methacrylate. U.S. Patent

BAD ORIGINAL

4,196,190 to Gehman et al describes water insoluble
tetrapolymers based on alkyl acrylate, methylmethacrylate,
hydroxyethyl methacrylate and methacrylic acid for use
in hair-setting or holding resins.

This invention is based on the discovery that by
partially neutralizing acid/hydroxyalkyl ester copolymers as, or shortly after, the copolymers are synthesized, the copolymers in aqueous concentrate form
are stabilized, that is, the polymer concentrates remain
pourable for several weeks or even months. In contrast,
unneutralized solutions of the copolymers rapidly increase
in viscosity soon after synthesis, and after a few days
or weeks form non-pourable gelatinous masses. It is
believed that the rapid increase in viscosity and ulti-
mate gel formation is due to spontaneous crosslinking
between the carboxylic acid and hydroxyalkyl groups of
the unneutralized copolymers, and that neutralization
inhibits the crosslinking reaction. Moreover, for the
molecular weight ranges and viscosities preferred for
more efficient incorporation of the copolymers into
rayon alloy fibers, complete neutralization is undesirable.

The polymer compositions of the invention comprise copolymers of (a) an alpha, beta-monoethylenically
unsaturated monocarboxylic acid, and (b) a hydroxyalkyl
ester of such acid, wherein the alkyl group contains 2
to 6 carbon atoms, in a monomer ratio (a:b) ranging
from 95:5 to 50:50 by weight. Typical monocarboxylic
acid monomers are acrylic acid, methacrylic acid, butenoic
acid and 2-methylbutenoic acid. Acrylic acid is preferred
and can be the only acid monomer or can be used in
admixture with one or more of methacrylic acid and

BAD ORIGINAL

homologs thereof. Useful ester monomers include hydroxyethyl methacrylate, hydroxyethyl acrylate, hydroxypropyl
acrylate, hydroxypropyl methacrylate, and the hydroxyalkyl
($C_2$-$C_6$) esters of butenoic acid and methylbutenoic
acid. Preferred hydroxyalkyl esters are hydroxyethyl
methacrylate, hydroxyethyl acrylate, hydroxypropyl
methacrylate, and hydroxypropyl acrylate, including
mixtures of two or more thereof. For ester monomers in
which the ester group is propyl or higher, the hydroxyl
group is attached to the terminal carbon atom or to a
carbon atom intermediate the terminal carbon atom and
the alpha carbon atom. More usually, the ester monomers
are a mixture of isomers wherein the hydroxyl group of
a portion of the ester monomers is bonded to the terminal
carbon atom and in the remaining ester monomers is
bonded to intermediate carbon atoms, e.g., mixtures
containing 3-hydroxypropyl methacrylate and 2-hydroxypropyl
methacrylate.

The copolymers may contain minor proportions,
e.g., up to about 25 wt. %, of other monomers in addition
to monomers (a) and (b) provided the types and amount
are such as not to detract materially from the useful
properties of the polymers and polymer solutions. Appropriate optional monomers include any monomers which are
monofunctional to monomers (a) and (b) and therefore
will not introduce crosslinking. Among acceptable
other monomers are acrylic and methacrylic esters, such
as the $C_1$-$C_{18}$ alkyl esters thereof, styrene, alkyl ($C_1$-
$C_8$) substituted styrenes, vinyl esters such as vinyl
acetate, and vinyl halides such as vinyl chloride, and
the like.

The copolymers have molecular weights (weight
average) in the range of about 100,000 to about 500,000,
preferably about 300,000 to about 400,000. Molecular
weights substantially under 100,000 will not provide

-7-

sufficient fluid-holding capacity and molecular weights over 500,000 render the copolymer solutions too viscous for efficient handling and incorporation into the viscose.

The viscosity of solutions of the polymers, as well as resistance of the copolymers to crosslinking and gelation, is also related to the extent to which the copolymers are neutralized. Moreover, neutralization will solubilize those copolymers which are marginally water-soluble when synthesized. Generally, it has been found that at least about 25% of the copolymer should be neutralized, that is, at least about 25% of the carboxyl groups of the copolymer should be converted to salt form. While copolymers at or near the lower limit of molecular weight may be completely neutralized, complete neutralization of higher molecular weight copolymers would render such copolymers too viscous for most industrial applications. Accordingly, neutralization to the extent of about 25-75%, more preferably about 30-50% (particularly in the case of copolymers of higher molecular weight, e.g., about 300,000 to 400,000), provides best results.

The copolymers are further characterized in that aqueous solutions containing 5 to 20 weight % of the neutralized copolymer are resistant to gelation and exhibit a Brookfield viscosity of not greater than 20,000 cps measured at 20°C ± 2°C using spindle No. 3 at 3 rpm. Preferably, the upper limit of viscosity is about 10,000 cps, for optimum ease of handling when the copolymers are to be blended into viscose for the spinning of alloy rayon therefrom.

Preferred copolymers have monomer ratios ranging from 90:10 to 60:40. Typical of these copolymers are the following: acrylic acid/hydroxyethyl methacrylate (80/20 to 70/30) acrylic acid/hydroxyethyl acrylate (80/20) and acrylic acid/hydroxypropyl methacrylate (80/20 to 90/10).

BAD ORIGINAL

8

The copolymers of the invention are synthesized by techniques well-known in the art (for example, by solution polymerization, using a peroxy catalyst) to provide aqueous dispersions containing about 10-20% by weight of the polymer. See, for example, C.E. Schildknecht, ed., "Polymer Processes," Vol X of High Polymers, Interscience Publishers (1956), pages 175-194. Since cross-linking will begin as soon as the polymers are synthesized, it is preferred to stabilize the polymers upon synthesis. Any alkaline material known to neutralize carboxylic acid groups of polymers but without introducing cross-linking may be used. Typical useful neutralizing agents are monovalent metal hydroxides such as sodium hydroxide and potassium hydroxide; carbonates such as sodium carbonate and bicarbonate; silicates such as sodium silicate; ammonium hydroxide; and organic amines such as triethylamine and diethanolamine. Sodium hydroxide and ammonium hydroxide are preferred.

After neutralization the polymer solutions may be stored for extended periods of time or shipped to a point of use, without undergoing gelation. Alternatively, the neutralized solutions may be reduced to a dry form (as by drum drying) and stored or shipped as desired and redissolved.

The following Examples will serve to further illustrate the invention but without intent to limit the scope thereof except as set forth in the appended claims. All parts and percentages are by weight unless otherwise indicated.

BAD ORIGINAL

-9-

Example 1

Preparation of acrylic acid/hydroxyethyl methacrylate; (80/20 wt.) copolymer.

Into a 5 liter 3-neck round bottom flask is charged 2960 ml of deionized (DI) water. The water is heated with a heating mantle to 85-87°C while being stirred with a mechanical stirrer. While this is being done, 416g of acrylic acid (AA) and 104g of 2-hydroxyethyl methacrylate (HEMA) are charged into a one-liter graduated separatory funnel. A 1 wt. % aqueous solution of ammonium persulfate (APS) is also prepared. When the temperature of the water levels off at 85-87°C, 13 ml of the 1 wt. % APS solution is added to the reactor. The monomer solution and a co-feed catalyst of 52 ml of the 1 wt. % APS solution are then added gradually and proportionally to the reactor over a period of about two hours. During the addition the temperature is maintained at 85-87°C and agitation is increased gradually to maintain good stirring. After the additions are completed the polymer solution is held at 85-87°C for 30 minutes. At the end of the 30 minute time period an additional catalyst system consisting of 0.4g of tertiary butyl hydroperoxide diluted in 10 ml of DI water and 0.3g of sodium sulfoxylate formaldehyde dissolved in 10 ml of DI water are added. Stirring is continued for 30 minutes. A neutralizer consisting of 232g of 50% sodium hydroxide is added. Stirring is continued for about 30 minutes. The product obtained is a clear solution with a viscosity of about 7000 cps (Brookfield Viscometer, 12 rpm, spindle 3, 20°C ± 2°C) and has a polymer solids content of 15.4% with about 50% of the acid groups neutralized.

Examples 2 - 8

Essentially as described in Example 1, aqueous solutions were prepared containing about 15% polymer solids of the following copolymers (Table I). In each

BAD ORIGINAL

-10-

case the copolymers were 50% neutralized in solution by the addition of the requisite amounts of a 50% sodium hydroxide solution. The polymer solutions exhibited a Brookfield viscosity of about 7000 cps, measured at 20°C ± 2°C, using spindle No. 3 at 12 rpm.

Table I

| Example | Monomers | Monomer wt ratio (%) |
|---|---|---|
| 2 | acrylic acid/hydroxyethyl methacrylate | 70/30 |
| 3 | acrylic acid/hydroxypropyl methacrylate | 80/20 |
| 4 | acrylic acid/hydroxypropyl methacrylate | 90/10 |
| 5 | acrylic acid/hydroxyethyl acrylate | 80/20 |
| 6 | methacrylic acid/hydroxyethyl methacrylate | 80/20 |
| 7 | methacrylic acid/hydroxypropyl methacrylate | 80/20 |
| 8 | acrylic acid/hydroxypropyl acrylate | 80/20 |

Example 9

This example illustrates the effect of polymer solids and degree of neutralization upon solution viscosity and stability (resistance to gellation) of aqueous copolymer solutions of the invention. The objective was to determine the degree of neutralization required to stabilize the polymers for given periods while minimizing increase in solution viscosity. The copolymers were prepared essentially as described in Example 1 except that neutralization was carried out to various levels on different samples of the same copolymer. The samples were neutralized to the levels indicated, stored at 55°C for various intervals, and the samples were cooled to 20°C ± 2°C. before measuring solution viscosities (Brookfield, spindle 3, 3 rpm, 20°C ± 2°C).

The data (Tables II-VII) shows that the polymer solutions have an optimum combination of viscosity and stability when neutralized to about 50%. In many cases

-11-

(Tables II-V and VII) good stability is also evident at 25% neutralization provided the polymer solids are kept relatively low (about 10%).

Table II

Copolymer Solution A: Acrylic acid/hydroxyethyl methacrylate (80/20), 10% polymer solids

| Neutralization (%) | 0 | 25 | 50 | 75 | 100 |
|---|---|---|---|---|---|
| Solution pH | 2.2 | 4.3 | 5.1 | 5.9 | 12 |

| Time (Days) | Viscosity (cps) | | | | |
|---|---|---|---|---|---|
| 0 | 75 | 325 | 1050 | 1700 | 3500 |
| 3 | 530 | 400 | 1050 | 1650 | 3050 |
| 7 | 800 | 500 | 1050 | 1700 | 3000 |
| 14 | Gelled | 700 | 1050 | 1800 | 3150 |
| 24 | Gelled | 950 | 1100 | 1800 | 3150 |
| 33 | Gelled | 1050 | 1200 | 1750 | 2900 |

Table III

Copolymer Solution B: Acrylic acid/hydroxyethyl methacrylate (70/30), 9.3% polymer solids

| Neutralization (%) | 0 | 25 | 50 | 75 | 100 |
|---|---|---|---|---|---|
| Solution pH | 2.3 | 4.2 | 5.0 | 5.9 | 11.4 |

| Time (Days) | Viscosity (cps) | | | | |
|---|---|---|---|---|---|
| 0 | 75 | 125 | 150 | 500 | 950 |
| 3 | 70 | 120 | 350 | 350 | 750 |
| 7 | 175 | 75 | 125 | 550 | 800 |
| 14 | 81,000 | 200 | 175 | 375 | 850 |
| 24 | Gelled | 100 | 150 | 600 | 800 |
| 33 | Gelled | 125 | 200 | 400 | 850 |

BAD ORIGINAL

0055055

BAD ORIGINAL

-12-

### Table IV

Copolymer Solution C: Acrylic acid/hydroxypropyl methacrylate (80/20), 12.5% polymer solids

| Neutralization (%) | 0 | 25 | 50 | 75 | 100 |
|---|---|---|---|---|---|
| Solution pH | 2.6 | 4.6 | 5.1 | 5.8 | 7.0 |

| Time (Days) | Viscosity (cps) | | | | |
|---|---|---|---|---|---|
| 0 | 225 | 850 | 1750 | 2750 | 6300 |
| 3 | 290 | 800 | 1500 | 2550 | 4750 |
| 7 | 750 | 1100 | 1550 | 2700 | 4800 |
| 14 | 975 | 800 | 1700 | 2600 | 2600 |
| 24 | 2300 | 1300 | 1700 | 2800 | 4300 |
| 33 | Gelled | 1550 | 1750 | 2800 | 5000 |

### Table V

Copolymer Solution D: Acrylic acid/hydroxypropyl methacrylate (90/10), 11.1% polymer solids

| Neutralization (%) | 0 | 25 | 50 | 75 | 100 |
|---|---|---|---|---|---|
| Solution pH | 2.5 | 4.4 | 5.2 | 6.2 | 7.2 |

| Time (Days) | Viscosity (cps) | | | | |
|---|---|---|---|---|---|
| 0 | 350 | 1050 | 2050 | 3600 | 7900 |
| 3 | 350 | 850 | 1850 | 3200 | 7200 |
| 7 | 575 | 1100 | 1850 | 3250 | 6600 |
| 14 | 650 | 1050 | 2100 | 3250 | 5800 |
| 24 | 1600 | 1300 | 2100 | 3500 | 6600 |
| 33 | 2650 | 1500 | 2300 | 3250 | 6800 |

0055055

-13-

## Table VI

<u>Copolymer Solution E:</u> Acrylic acid/hydroxyethyl acrylate (80/20), 12.5% polymer solids

| Neutralization (%) | 0 | 25 | 50 | 75 | 100 |
|---|---|---|---|---|---|
| Solution pH | 2.2 | 4.2 | 5.0 | 5.7 | 6.8 |

| Time (Days) | Viscosity (cps) | | | | |
|---|---|---|---|---|---|
| 0 | 775 | 1800 | 3500 | 7600 | 12200 |
| 3 | Gelled | 2300 | 3150 | 6600 | 11400 |
| 7 | Gelled | 3250 | 3500 | 3500 | 11200 |
| 14 | Gelled | 6400 | 4400 | 6500 | 12200 |
| 24 | Gelled | Gelled | 5000 | 7200 | 11000 |
| 33 | Gelled | Gelled | 5500 | 6800 | 11800 |

Table VII shows relationship of viscosity to polymer solids content of the solutions: as polymer solids increases, the viscosities also increase. In some cases, higher solids can also cause instability since viscosity then increases at a faster rate (compare the unneutralized solutions with 25% neutralized solutions). From the standpoint of the economics of production and shipping, polymer solids should be as high as possible. However, since high polymer solids introduces higher viscosities, the solutions may become difficult to pump or otherwise managed by the user. Hence, when shipped and used as polymer solutions, polymer solids are best kept at about 10-15% and the polymers should be neutralized no more than about 75%, preferably about 50%.

BAD ORIGINAL

## TABLE VII

Copolymer Solution F:  Acrylic acid/hydroxyethyl methacrylate (80/20), 10% and 13% polymer solids

| Neutralization (%) | 0 | | 25 | | 50 | | 75 | | 100 | |
|---|---|---|---|---|---|---|---|---|---|---|
| Solution pH | 2.2 | 2.3 | 4.3 | 4.4 | 5.1 | 5.0 | 5.9 | 5.7 | 12.0 | 10.7 |

Viscosity (cps)

| Time (Days) | Polymer Solids (%) | | Polymer Solids (%) | | Polymer Solids (%) | | Polymer Solids (%) | | Polymer Solids (%) | |
|---|---|---|---|---|---|---|---|---|---|---|
| | 10 | 13 | 10 | 13 | 10 | 13 | 10 | 13 | 10 | 13 |
| 0 | 75 | 1900 | 325 | 2900 | 1050 | 6400 | 1700 | 9400 | 3500 | 16600 |
| 3 | 530 | Gelled | 400 | 4100 | 1050 | 5900 | 1650 | 8400 | 3050 | 14800 |
| 7 | 800 | Gelled | 500 | 8000 | 1050 | 5600 | 1700 | 6700 | 3000 | 13400 |
| 14 | Gelled | Gelled | 700 | Gelled | 1050 | 6600 | 1800 | 7200 | 3150 | 14100 |

-14-

15

## CLAIMS

1    A method of stabilizing an aqueous solution containing 5-20% by weight of a hydrophilic copolymer of a) one or more α,β-monoethylenically unsaturated carboxylic acids and b) one or more $C_2$-$C_6$ hydroxyalkyl esters of an α,β-monoethylenically unsaturated carboxylic acid in a monomer ratio a:b of from 95:5 to 50:50 and having a weight average molecular weight of from 100,000 to 500,000, which comprises partially neutralizing the carboxylic acid groups in the polymer to the extent of at least 25%.

2    A method according to claim 1, wherein the copolymer is neutralized to an extent not exceeding 75%.

3    A method according to claim 1 or 2, wherein component a) of the polymer is acrylic or methacrylic acid.

4    A method according to any one of claims 1-3, wherein component b) of the polymer is hydroxyethylacrylate or methacrylate or hydroxypropylacrylate or methacrylate.

5    A stabilized hydrophilic polymer composition comprising a copolymer of a) one or more α,β-monoethylenically unsaturated carboxylic acids, and b) at least one $(C_2$-$C_6)$-hydroxyalkyl ester of an α,β-monoethylenically unsaturated carboxylic acid in a monomer ratio a:b of from 95:5 to 50:50, and having a weight average molecular weight in the range 100,000 to 500,000, characterised in that the copolymer is partially neutralized to the extent that at least 25% of the carboxylic acid groups in the polymer are in salt form, and in that solutions of the polymer in water containing 5-20% by weight of dissolved polymer exhibit a Brookfield viscosity not greater than 20,000 cps at $20°C \pm 2°C$ using a No. 3 spindle at 3 r.p.m.

6       A composition according to claim 5, wherein the monomer ratio a:b is in the range 60:40 to 90:10.

7       A composition according to claim 5 or 6, wherein the copolymer is neutralized to an extent not exceeding 75%.

8       A composition according to claim 5, 6 or 7, wherein monomer a) is acrylic or methacrylic acid.

9       A composition according to any one of claims 5-8, wherein monomer b) is hydroxyethyl acrylate, hydroxyethylmethacrylate, hydroxypropylacrylate or hydroxypropylmethacrylate.

10      A composition according to any one of claims 5-9, comprising an aqueous solution of said copolymer at a concentration of from 5-20% by weight.